# EUROPÄISCHE PATENTSCHRIFT

(11) **EP 1 566 566 B1**
(45) Veröffentlichungstag und Bekanntmachung des Hinweises auf die Patenterteilung: **16.04.2008**
(21) Anmeldenummer: 05002221.9
(22) Anmeldetag: 03.02.2005
(51) Int. Cl.: F16F 15/134, F16F 15/137

(54) **Torsionsschwingungsdämpfer**
Torsional vibration damper
Amortisseur de vibrations torsionelles

(30) Priorität: 18.02.2004 DE 102004008121
(43) Veröffentlichungstag der Anmeldung: 24.08.2005
(73) Patentinhaber: LuK Lamellen und Kupplungsbau Beteiligungs KG, 77815 Bühl (DE)
(72) Erfinder: Friedmann, Oswald, 77839 Lichtenau (DE)

(56) Entgegenhaltungen:
- EP-A- 0 984 195
- US-A- 5 194 046
- US-A- 5 687 618
- US-A- 5 848 938
- US-A1- 2003 205 857

## Beschreibung

Die Erfindung betrifft einen Torsionsschwingungsdämpfer, insbesondere ein geteiltes Schwungrad, mit einer primären Schwungmasse, die drehfest mit der Antriebswelle einer Brennkraftmaschine verbindbar ist, und einer sekundären Schwungmasse, die gegen den Widerstand einer ersten Energiespeichereinrichtung und einer zweiten Energiespeichereinrichtung, die parallel zu der ersten Energiespeichereinrichtung geschaltet ist, relativ zu der primären Schwungmasse verdrehbar ist.

Derartige Torsionsschwingungsdämpfer sind zum Beispiel in Kraftfahrzeugen zwischen den Antriebsmotor und das Getriebe geschaltet. Je nach Betriebsart werden die beiden Schwungmassen um kleine oder große Winkel gegeneinander verdreht. Dabei können im Betrieb der Brennkraftmaschine Ungleichförmigkeiten auftreten, welche die Primärmasse zu Schwingungen anregen. Diese Schwingungen sollen nicht auf die sekundäre Schwungmasse übertragen werden, da sie in einem mit der sekundären Schwungmasse gekoppelten Getriebe zu Beschädigungen oder zu einer unerwünschten Geräuschentwicklung führen könnten.

Ein weiterer Torsionsschwingungsdämpfer, mit Merkmalen des Oberbegriffs des Anspruchs 1, ist aus dem Dokument US-A-5 194 046 bekannt.

Aufgabe der Erfindung ist es, einen Torsionsschwingungsdämpfer, insbesondere ein geteiltes Schwungrad, mit einer primären Schwungmasse, die drehfest mit der Antriebswelle einer Brennkraftmaschine verbindbar ist, und einer sekundären Schwungmasse, die gegen den Widerstand einer ersten Energiespeichereinrichtung und einer zweiten Energiespeichereinrichtung, die parallel zu der ersten Energiespeichereinrichtung geschaltet ist, relativ zu der primären Schwungmasse verdrehbar ist, so zu gestalten, dass im Betrieb der Brennkraftmaschine auftretende Ungleichförmigkeiten schwingungstechnisch isoliert werden, das heißt, nicht von der primären auf die sekundäre Schwungmasse übertragen werden.

Die Aufgabe ist bei einem Torsionsschwingungsdämpfer, insbesondere einem geteilten Schwungrad, mit einer primären Schwungmasse, die drehfest mit der Antriebswelle einer Brennkraftmaschine verbindbar ist, und einer sekundären Schwungmasse, die gegen den Widerstand einer ersten Energiespeichereinrichtung und einer zweiten Energiespeichereinrichtung, die parallel zu der ersten Energiespeichereinrichtung geschaltet ist, relativ zu der primären Schwungmasse verdrehbar ist, dadurch gelöst, dass die zweite Energiespeichereinrichtung so mit den beiden Schwungmassen gekoppelt ist, dass die zweite Energiespeichereinrichtung nur bei kleinen Verdrehwinkeln, insbesondere von 1 ° bis 10°, und nicht bei großen Verdrehwinkeln, insbesondere von mehr als 10°, eine degressive Wirkung entfaltet. Die beiden Schwungmassen sind mit Hilfe von Lagereinrichtungen relativ zueinander verdrehbar. Die beiden Energiespeichereinrichtungen dienen dazu, im Betrieb der Brennkraftmaschine auftretende, oszillierende Schwingungen nicht auf die Sekundärschwungmasse zu übertragen, die drehfest mit mindestens einer Getriebeeingangswelle verbunden sein kann. Der Verdrehwinkel, bis zu dem die zweite Energiespeichereinrichtung ihre degressive Wirkung entfaltet, wird auch als Freiwinkel bezeichnet, und beträgt vorzugsweise 1° bis 10°, insbesondere 6°. Die degressive Wirkung der zweiten Energiespeichereinrichtung ist so mit der Wirkung der ersten Energiespeichereinrichtung abgestimmt, dass die Wirkung der ersten Energiespeichereinrichtung im Bereich des Freiwinkels nahezu kompensiert wird.

Ein bevorzugtes Ausführungsbeispiel des Torsionsschwingungsdämpfers ist dadurch gekennzeichnet, dass die zweite Energiespeichereinrichtung eine Federeinrichtung umfasst, die eine degressiv verlaufende Federkennlinie aufweist. Die Federeinrichtung kann mindestens eine degressive Feder umfassen. Die Federeinrichtung kann aber auch keine degressive Feder umfassen, und zum Beispiel mit Hilfe von Rampen ihre degressive Wirkung entfalten.

Ein weiteres bevorzugtes Ausführungsbeispiel des Torsionsschwingungsdämpfers ist dadurch gekennzeichnet, dass die Federeinrichtung eine Schnappfeder umfasst. Die Schnappfeder kann einteilig ausgebildet sein oder von zwei gegeneinander wirkenden Tellerfedern gebildet werden. Die Schnappfeder dient dazu, die Wirkung der ersten Energiespeichereinrichtung bei kleinen Verdrehwinkeln zu kompensieren. Die Anschläge der vorzugsweise als Tellerfeder ausgebildeten Schnappfeder können federnd oder dämpfend ausgeführt sein.

Ein weiteres bevorzugtes Ausführungsbeispiel des Torsionsschwingungsdämpfers ist dadurch gekennzeichnet, dass die zweite Energiespeichereinrichtung mit einer der Schwungmassen fest verbunden ist. Die zweite Energiespeichereinrichtung wird vorzugsweise fest mit der sekundären Schwungmasse verbunden, damit ein im Betrieb auftretender Anschlagimpuls nicht über die sekundäre Schwungmasse in ein dieser nachgeschaltetes Getriebe übertragen wird.

Ein weiteres bevorzugtes Ausführungsbeispiel des Torsionsschwingungsdämpfers ist dadurch gekennzeichnet, dass die zweite Energiespeichereinrichtung so mit der anderen Schwungmasse gekoppelt ist, dass sich die andere Schwungmasse relativ zu der fest mit der zweiten Energiespeichereinrichtung verbundenen Schwungmasse ohne großen Widerstand um kleine Verdrehwinkel verdrehen kann. Dadurch wird gewährleistet, dass kleine, oszillierende Schwingungen nicht von der einen, insbesondere der primären, auf die andere, insbesondere die sekundäre, Schwungmasse übertragen werden.

Ein weiteres bevorzugtes Ausführungsbeispiel des Torsionsschwingungsdämpfers ist dadurch gekennzeichnet, dass die zweite Energiespeichereinrichtung über eine Freilaufeinrichtung mit der anderen Schwungmasse verbunden ist. Die Freilaufeinrichtung gewährleistet, dass sich die beiden Schwungmassen um große Verdrehwinkel gegeneinander verdrehen können, ohne dass die zweite Energiespeichereinrichtung ihre degressive Wirkung entfaltet.

Ein weiteres bevorzugtes Ausführungsbeispiel des Torsionsschwingungsdämpfers ist dadurch gekennzeichnet, dass die Freilaufeinrichtung zwei gegenläufige Freiläufe umfasst. Die Freiläufe sind so ausgeführt, dass sie nie in beiden Verdrehrichtungen gleichzeitig klemmen. Die Freiläufe können als selbsthemmende Kupplungen ausgeführt werden. Die Verstärkung kann über einen Konus oder durch mehrere Lamellen erreicht werden. Die Freiläufe können auch durch verzahnte Blechteile gebildet werden.

Ein weiteres bevorzugtes Ausführungsbeispiel des Torsionsschwingungsdämpfers ist dadurch gekennzeichnet, dass die Freilaufeinrichtung einen doppelt wirkenden Freilauf umfasst. Der doppelt wirkende Freilauf ist so ausgeführt, dass er nie in beiden Verdrehrichtungen gleichzeitig klemmt.

Ein weiteres bevorzugtes Ausführungsbeispiel des Torsionsschwingungsdämpfers ist dadurch gekennzeichnet, dass die Freilaufeinrichtung mindestens eine Rolle umfasst, die radial außen drehbar an der zweiten Energiespeichereinrichtung angebracht ist. Vorzugsweise sind mehrere Rollen gleichmäßig über den Umfang der zweiten Energiespeichereinrichtung verteilt angeordnet. Statt der Rolle kann auch eine Kugel oder ein sonstiges Drehelement drehbar an der zweiten Energiespeichereinrichtung angebracht sein.

Ein weiteres bevorzugtes Ausführungsbeispiel des Torsionsschwingungsdämpfers ist dadurch gekennzeichnet, dass die Rolle in einem Führungskanal geführt ist, der, bezogen auf einen Kreisbogen um die Drehachse der Schwungmasse, schräg verläuft. Durch die schräge Anordnung des Führungskanals wird die Aufbringung einer Kraft in axialer Richtung auf die Rolle und die zweite Energiespeichereinrichtung ermöglicht, wenn die Schwungmassen gegeneinander verdreht werden.

Ein weiteres bevorzugtes Ausführungsbeispiel des Torsionsschwingungsdämpfers ist dadurch gekennzeichnet, dass der Führungskanal von zwei Seitenwänden einer Führungseinrichtung begrenzt ist. Die Führungseinrichtung ist vorzugsweise aus Blech gebildet und lose zwischen den beiden Schwungmassen angeordnet. Dabei wird die Führungseinrichtung durch die in sie eingreifenden Rollen in Position gehalten.

Ein weiteres bevorzugtes Ausführungsbeispiel des Torsionsschwingungsdämpfers ist dadurch gekennzeichnet, dass die beiden Seitenwände der Führungseinrichtung entlang dem Führungskanal parallel zueinander verlaufen. Die parallelen Seitenwände dienen dazu, die Rolle zu führen.

Ein weiteres bevorzugtes Ausführungsbeispiel des Torsionsschwingungsdämpfers ist dadurch gekennzeichnet, dass der Abstand der beiden Seitenwände der Führungseinrichtung an den Enden des Führungskanals abnimmt. Die zusammenlaufenden Seitenwände bilden an den Enden des Führungskanals Anschläge für die Rolle.

Ein weiteres bevorzugtes Ausführungsbeispiel des Torsionsschwingungsdämpfers ist dadurch gekennzeichnet, dass die beiden Seitenwände, im Querschnitt betrachtet, durch ein dachförmiges Verbindungselement miteinander verbunden sind, das zwei sich schneidende Dachflächen aufweist. Das dachförmige Verbindungselement verleiht der Führungseinrichtung Stabilität.

Ein weiteres bevorzugtes Ausführungsbeispiel des Torsionsschwingungsdämpfers ist dadurch gekennzeichnet, dass an der Führungseinrichtung Reibbeläge befestigt sind, die in Abhängigkeit vom Zustand der zweiten Energiespeichereinrichtung zwischen der Führungseinrichtung und einer der Schwungmassen, insbesondere der primären Schwungmasse, eingeklemmt werden. Die Reibbeläge ermöglichen die Übertragung eines Drehmoments zwischen den beiden Schwungmassen über die zweite Energiespeichereinrichtung.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines Zweimassenschwungrads mit einer degressiven Schnappfeder gemäß einem ersten Ausführungsbeispiel;
- Figur 2: eine Auftragung des Moments über dem Verdrehwinkel des in Figur 1 dargestellten Zweimassenschwungrads bei einem Reibmoment von vier Nm;
- Figur 3: eine Auftragung des Moments über dem Verdrehwinkel des in Figur 1 dargestellten Zweimassenschwungrads bei einem Reibmoment von acht Nm;
- Figur 4: eine schematische Darstellung eines Zweimassenschwungrads gemäß einem weiteren Ausführungsbeispiel mit Freiläufen;

- Figur 5: einen Ausschnitt aus Figur 4 beim Nulldurchgang des Moments;
- Figur 6: den Ausschnitt aus Figur 4 mit einer eingeklemmten Freilaufkugel;
- Figur 7: den Ausschnitt aus Figur 4 mit einer frei gewordenen Freilaufkugel;
- Figur 8: einen Ausschnitt der oberen Hälfte eines Zweimassenschwungrads gemäß einem weiteren Ausführungsbeispiel im Schnitt und
- Figur 9: eine Untersicht der in Figur 8 dargestellten Führungseinrichtung.

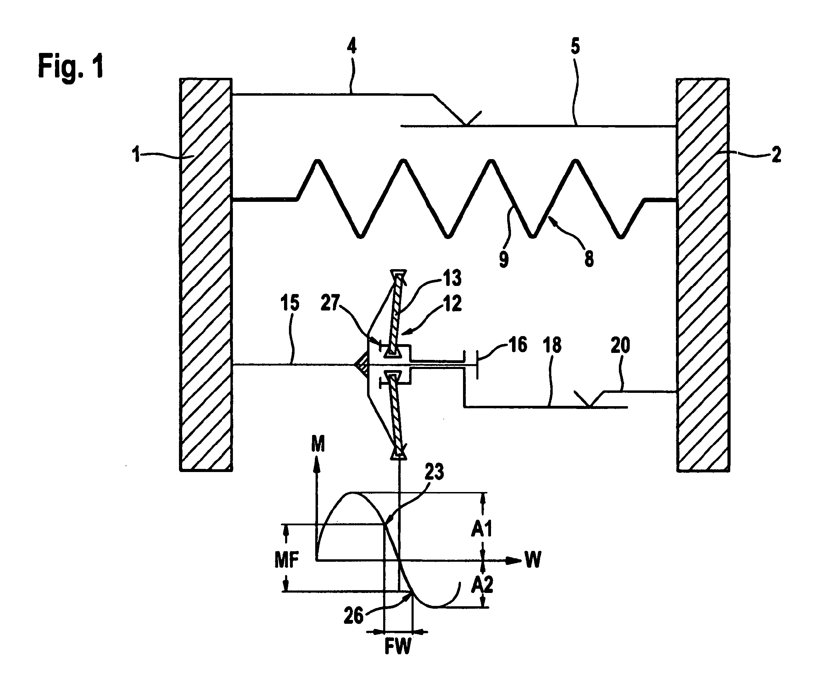

Der in Figur 1 dargestellte Torsionsschwingungsdämpfer in Form eines Zweimassenschwungrads umfasst eine an einer Kurbelwelle einer Brennkraftmaschine eines Kraftfahrzeugs befestigbare Primärmasse 1, an der mittels eines Lagers eine Sekundärmasse 2 koaxial und verdrehbar eine Drehachse gelagert ist. Durch eine am Ende gezackte Linie 4, die von der Primärmasse 1 ausgeht, und eine gerade Linie 5, die von der Sekundärschwungmasse 2 ausgeht, ist die beim Verdrehen der beiden Schwungmassen gegeneinander auftretende Grundreibung angedeutet.

Die Primärmasse 1 ist mit der Sekundärmasse 2 über eine komprimierbare Energiespeicher 9 aufweisende erste Energiespeichereinrichtung 8 antriebsmäßig verbunden. Die Energiespeicher 8, hier in Form von in Umfangsrichtung länglichen Schraubenfedern mit einem großen Kompressionsweg, sind in einer (nicht dargestellten) Kammer aufgenommen, die zumindest teilweise mit einem viskosen Medium gefüllt sein kann.

Parallel zu der ersten Energiespeichereinrichtung 8 ist eine zweite Energiespeichereinrichtung 12 geschaltet, die eine Schnappfeder 13 umfasst. Unterhalb der Schnappfeder 13 ist der Verlauf des Moments M der Schnappfeder 13 über dem Drehwinkel W aufgetragen. Das Moment M verläuft im Wesentlichen sinusförmig, wobei die positive Amplitude A1 etwas größer als die negative Amplitude A2 ist.

Radial außen greift an der Schnappfeder 13 ein Verbindungsteil 15 an, das fest mit der Primärmasse 1 verbunden ist. Außerdem ist an dem Verbindungsteil 15 ein Anschlagelement 16 ausgebildet, an dem ein Zwischenteil 18 zur Anlage kommen kann, das radial innen an der Schnappfeder 13 angreift und relativ zu dem Verbindungsteil 15 bewegbar ist. Das Zwischenteil 18 ist bei Aufbringung eines Reibmoments von vier bis acht Nm relativ zu der Sekundärschwungmasse 2 bewegbar, wie durch eine am Ende gezackte Linie 20 angedeutet ist.

Wenn die in Figur 1 dargestellte Primärmasse 1 relativ zu der Sekundärmasse 2 verdreht wird, das heißt in Figur 1 sich auf die Sekundärmasse 2 zu bewegt, dann steigt das Moment der Schnappfeder 13 zunächst an, bis der Wert der Amplitude A1 erreicht ist. Danach fällt das Moment der Schnappfeder 13 ab. Der Punkt 23 in dem Momentenverlauf entspricht dem Zustand, wenn der Anschlag 16 erreicht wird. Zwischen dem Punkt 23 und einem Punkt 26 durchläuft das Moment den Nullpunkt und wird negativ. Der Punkt 23 entspricht dem Erreichen eines Anschlags 27, der an dem Zwischenteil 18 ausgebildet ist. Der Winkelbereich zwischen den Punkten 23 und 26 wird als Freiwinkel FW bezeichnet und beträgt im vorliegenden Beispiel 1,5°. Das Moment MF zwischen den Punkten 23 und 26 beträgt im vorliegenden Beispiel 3,75 Nm.

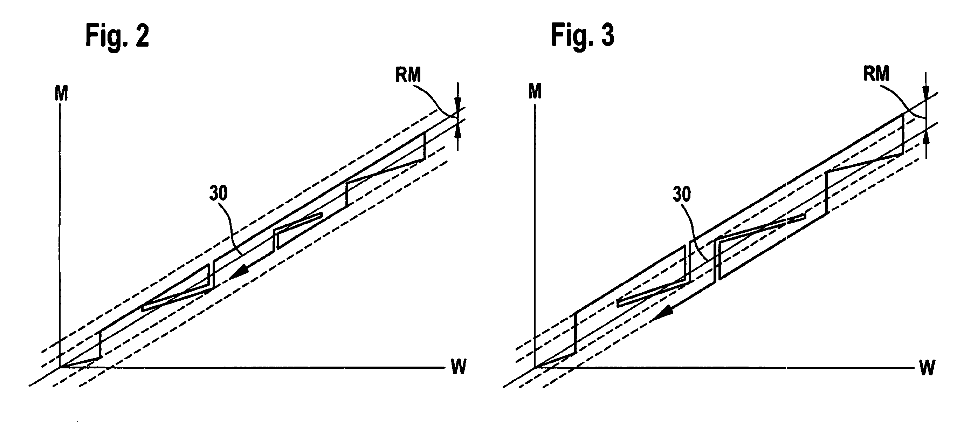

In Figur 2 ist der Verlauf des Moments M des in Figur 1 dargestellten Torsionsschwingungsdämpfers über dem Verdrehwinkel W bei einem Reibmoment RM von 4 Nm aufgetragen. Die Steigung der Bogenfeder 9 aus Figur 1 ist in Figur 2 durch eine durchgezogene Linie 30 angedeutet. Da das Moment der Schnappfeder 13 zunächst ansteigt und dem Moment der Bogenfeder 9 entgegenwirkt, steigt das Moment in Figur 2 zunächst mit einer geringeren Steigung als die Bogenfeder 9. Nach dem Erreichen des Punkts 23 und vor dem Erreichen des Punkts 26 in Figur 1 schnappt die Schnappfeder 13 um, so dass nur die Bogenfeder 9 ihre Wirkung entfaltet. Wenn der Verdrehwinkel umgekehrt wird, dann schnappt die Schnappfeder 13 wieder zurück.

In Figur 3 ist der Verlauf des Moments des Torsionsschwingungsdämpfers aus Figur 1 bei einem Reibmoment RM von acht Nm dargestellt. Die erfindungsgemäße zweite Energiespeichereinrichtung 12 in Figur 1 hat den Vorteil, dass sie mit dem Verdrehwinkel der Bogenfeder 9 mitwandert. Das hat den Vorteil, dass in der degressiven Schnappfeder 13 nur die Energie für die notwendigen Teilschleifen zur Isolierung der Motorungleichförmigkeit gespeichert werden müssen. Damit kann die wirksame Steigung nahezu beliebig reduziert werden.

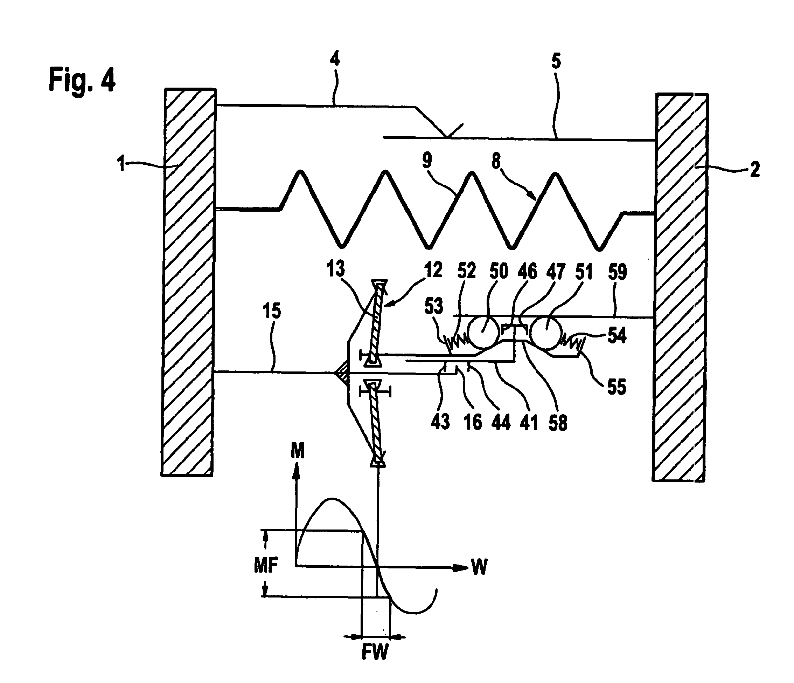

In Figur 4 sind zwei Primärmassen 1 und 2 dargestellt, die bei Überwindung einer Grundreibung 4, 5 relativ zueinander verdrehbar sind. Eine erste Energiespeichereinrichtung 8, die eine Bogenfeder 9 umfasst, ist zwischen der Primärschwungmasse 1 und der Sekundärschwungmasse 2 eingespannt. Eine zweite Energiespeichereinheit 12, die eine Schnappfeder 13 umfasst, ist über ein Verbindungsteil 15, das radial außen an der Schnappfeder 13 angreift, mit der Primärschwungmasse 1 gekoppelt. An dem Verbindungselement 15 ist ein Anschlagelement 16 für ein Zwischenteil 41 ausgebildet.

An dem Zwischenteil 41 sind zwei Wegbegrenzungselemente 43, 44 ausgebildet, welche eine mögliche Bewegung des Zwischenteils 41 relativ zu dem Anschlagelement 16 begrenzen. Außerdem sind an dem Zwischenteil 41 Anschläge 46 und 47 für Freilaufkugeln 50 und 51 vorgesehen. An der Freilaufkugel 50 greift eine Feder 52 an, die sich an einem Stützarm 53 abstützt. An der Freilaufkugel 51 greift eine Feder 54 an, die sich an einem Stützarm 55 abstützt. Die Stützarme 53 und 55 gehen von einem Koppelelement 58 aus, das relativ zu dem Zwischenteil 41 bewegbar und radial innen an der Schnappfeder 13 angreift. Die Freilaufkugeln 50 und 51 sind zwischen dem Koppelelement 58 und einem Klemmelement 59 einklemmbar, das an der Sekundärschwungmasse 2 befestigt ist.

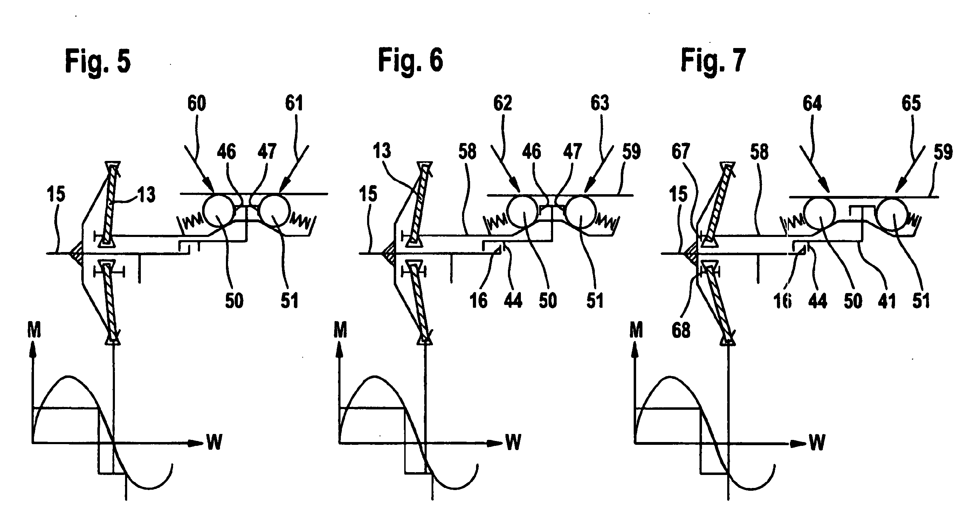

In Figur 5 ist durch einen Pfeil 60 angedeutet, dass die Freilaufkugel 50 an dem Anschlag 46 anliegt. Durch einen Pfeil 61 ist angedeutet, dass die Freilaufkugel 51 ebenfalls an dem zugehörigen Anschlag 47 anliegt. In diesem Zustand durchläuft das unterhalb der Schnappfeder 13 über dem Drehwinkel W aufgetragene Moment M seinen Nulldurchgang.

In Figur 6 ist der Zustand dargestellt, in welchem das Wegbegrenzungselement 44 an dem Anschlagelement 16 zur Anlage kommt. Dann wird, wie durch einen Pfeil 62 angedeutet ist, die Freilaufkugel 50 zwischen dem Koppelelement 58 und dem Klemmelement 59 eingeklemmt. Das Moment der Schnappfeder 13 weist einen negativen Wert auf. Durch einen Pfeil 63 ist angedeutet, dass die Freilaufkugel 51 an dem Anschlag 47 anliegt.

In Figur 7 liegen zwei Wegbegrenzungselemente 67, 68, die an dem Koppelelement 58 ausgebildet sind, an dem Verbindungsteil 15 an. Durch einen Pfeil 64 ist angedeutet, dass die Freilaufkugel 50 sowohl an dem Koppelelement 58 als auch an dem Klemmelement 59 anliegt. Durch einen Pfeil 65 ist angedeutet, dass die Freilaufkugel 51 frei ist, so dass die Primärmasse mit dem daran befestigten Verbindungsteil 15 unbegrenzt weiter geschoben werden kann. Die Freilaufkugeln 50 und 51 können nie gleichzeitig zwischen dem Koppelelement 58 und dem Klemmelement 59 eingeklemmt sein. Dadurch kann der positive und der negative Ast der Momentenkennlinie bis zum Anschlag durchfahren werden. Wenn über den Anschlag hinausgefahren wird, dann dreht die ganze Einheit nahezu kraftfrei weiter, um bei der nächsten Teilschleife wieder aktiv zu werden.

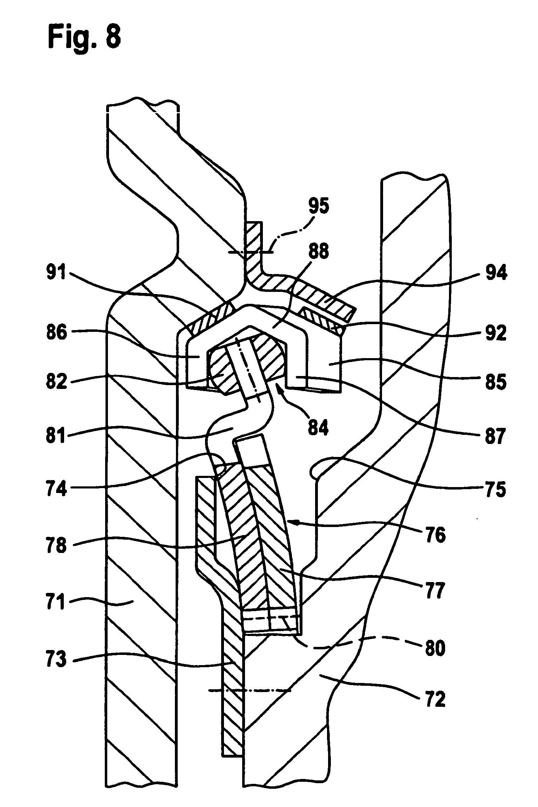

In Figur 8 ist eine Primärmasse 71 gezeigt, die mit einer Sekundärmasse 72 gekoppelt ist. An der Sekundärmasse 72 ist ein Anschlagblech 73 befestigt, an dem ein Anschlag 74 ausgebildet ist. Gegenüber von dem Anschlag 74 ist an der Sekundärmasse 72 ein weiterer Anschlag 75 ausgebildet. Zwischen den beiden Anschlägen 74 und 75 kann eine Schnappfeder 76 umschnappen. Die Schnappfeder 76 umfasst zwei gegeneinander wirkende Tellerfedern 77 und 78.

Durch eine gestrichelte Linie 80 ist eine Schraubverbindung angedeutet, mit Hilfe der die Schnappfeder 76 radial innen an der Sekundärmasse 72 befestigt ist. Radial außen geht von der Tellerfeder 78 ein Finger 81 aus, an dessen Ende eine Rolle 82 drehbar gelagert ist. Die Rolle 82 ist in einem Führungskanal 84 geführt, der in einer Führungseinrichtung 85 ausgebildet ist. Die Führungseinrichtung 85 umfasst zwei Seitenwände 86 und 87, die den Führungskanal 84 seitlich begrenzen. Die beiden Seitenwände 86 und 87 sind über ein dachförmiges Verbindungselement 88 miteinander verbunden.

Radial außen sind an der Führungseinrichtung 85 zwei Reibbeläge 91, 92 befestigt, mit deren Hilfe zwischen der Führungseinrichtung 85 und der Primärschwungmasse 71 eine selbstklemmende Kegelkupplung ausgebildet wird. Der Reibbelag 91 liegt in dem dargestellten Zustand an der Primärschwungmasse 71 an. Zwischen dem Reibbelag 92 und einem an der Sekundärschwungmasse 71 befestigten Gegenblech 94 ist dagegen Luft. Das Gegenblech 94 ist mit Hilfe einer Schraubverbindung 95 an der Primärschwungmasse 71 befestigt.

Wenn die Schnappfeder 76 aus der in Figur 8 dargestellten Stellung umschnappt, dann kommt der Reibbelag 92 an dem Gegenblech 94 zur Anlage. Dadurch wird gewährleistet, dass sowohl vor als auch nach dem Umschnappen der Schnappfeder 76 ein Drehmoment zwischen Primärschwungmasse 71 und Sekundärschwungmasse 72 übertragen werden kann.

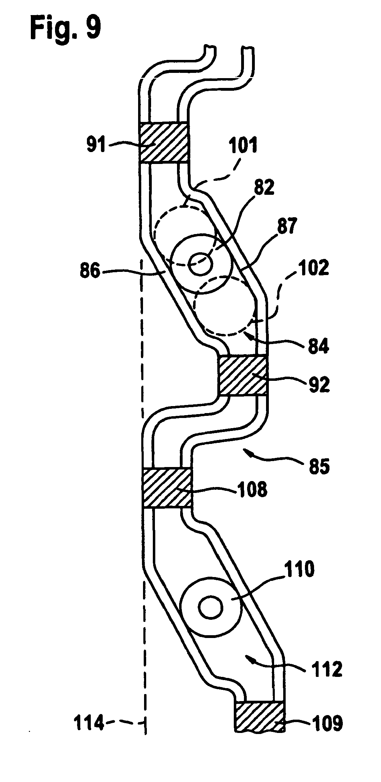

In Figur 9 sieht man, dass sich die Rolle 82 in dem Führungskanal 84 zwischen zwei Endstellungen hin und her bewegen kann, die durch gestrichelte Kreise 101 und 102 angedeutet sind. Außerdem sieht man in Figur 9, dass an der Führungseinrichtung 85 weitere Reibbeläge 108, 109 befestigt sind. Des Weiteren ist in der Führungseinrichtung 85 eine weitere Rolle 110 in einem weiteren Führungskanal 112 geführt. Die Führungskanäle 84 und 112 verlaufen schräg zu einem Kreisbogen 114 um die Drehachse der Schwungmassen 71, 72. Der Winkel zwischen dem Kreisbogen 114 und den Führungskanälen 84 und 112 beträgt etwa 30°. Die schräge Anordnung der Führungskanäle 84, 112 ermöglicht die Umwandlung von in axialer Richtung wirkenden Kräften der Schnappfeder 76 in radiale Kräfte.

### Bezugszeichenliste

- 1.: Primärschwungmasse
- 2.: Sekundärschwungmasse
- 3.: -
- 4.: gezackte Linie
- 5.: gerade Linie
- 6.: -
- 7.: -
- 8.: erste Energiespeichereinrichtung
- 9.: Bogenfeder
- 10.: -
- 11.: -
- 12.: zweite Energiespeichereinrichtung
- 13.: Schnappfeder
- 14.: -
- 15.: Verbindungsteil
- 16.: Anschlagelement
- 17.: -
- 18.: Zwischenteil
- 19.: -
- 20.: am Ende gezackte Linie
- 21.: -
- 22.: -
- 23.: Punkt
- 24.: -
- 25.: -
- 26.: Punkt
- 27.: Anschlag
- 28.: -
- 29.: -
- 30.: Steigung Bogenfeder

- 31.: -
- 32.: -
- 33.: -
- 34.: -
- 35.: -
- 36.: -
- 37.: -
- 38.: -
- 39.: -
- 40.: -
- 41.: Zwischenteil
- 42.: -
- 43.: Wegbegrenzungselement
- 44.: Wegbegrenzungselement
- 45.: -
- 46.: Anschlag
- 47.: Anschlag
- 48.: -
- 49.: -
- 50.: Freilaufkugel
- 51.: Freilaufkugel
- 52.: Feder
- 53.: Stützarm
- 54.: Feder
- 55.: Stützarm
- 56.: -
- 57.: -
- 58.: Koppelelement
- 59.: -
- 60.: Pfeil
- 61.: Pfeil
- 62.: Pfeil
- 63.: Pfeil
- 64.: Pfeil
- 65.: Pfeil
- 66.: -
- 67.: Wegbegrenzungselement
- 68.: Wegbegrenzungselement
- 69.: -
- 70.: -
- 71.: Primärmasse
- 72.: Sekundärmasse
- 73.: Anschlagblech
- 74.: Anschlag
- 75.: Anschlag
- 76.: Schnappfeder
- 77.: Tellerfeder
- 78.: Tellerfeder
- 79.: -
- 80.: gestrichelte Linie => Schraubverbindung
- 81.: Finger
- 82.: Rolle
- 83.: -
- 84.: Führungskanal
- 85.: Führungseinrichtung
- 86.: Seitenwand
- 87.: Seitenwand
- 88.: dachförmiges Verbindungselement
- 89.: -
- 90.: -
- 91.: Reibbelag
- 92.: Reibbelag
- 93.: -
- 94.: Gegenblech
- 95.: Schraubverbindung
- 96.: -
- 97.: -
- 98.: -
- 99.: -
- 100.: -
- 101.: Anschlagstellung
- 102.: Ausschlagstellung
- 103.: -
- 104.: -
- 105.: -
- 106.: -
- 107.: -
- 108.: weiterer Reibbelag
- 109.: Reibbelag
- 110.: weitere Rolle
- 111.: -
- 112.: Führungskanal
- 113.: -
- 114.: Kreisbogen

## Patentansprüche

1. Torsionsschwingungsdämpfer, insbesondere geteiltes Schwungrad, mit einer primären Schwungmasse (1), die drehfest mit der Antriebswelle einer Brennkraftmaschine verbindbar ist, und einer sekundären Schwungmasse (2), die gegen den Widerstand einer ersten Energiespeichereinrichtung (8) und einer zweiten Energiespeichereinrichtung (12), die parallel zu der ersten Energiespeichereinrichtung (8) geschaltet ist, relativ zu der primären Schwungmasse (1) verdrehbar ist, **dadurch gekennzeichnet, dass** die zweite Energiespeichereinrichtung (12) so mit den beiden Schwungmassen (1,2) gekoppelt ist, dass die zweite Energiespeichereinrichtung (12) nur bei kleinen Verdrehwinkeln, insbesondere von 1° bis 10°, und nicht bei großen Verdrehwinkeln, insbesondere von mehr als 10°, eine degressive Wirkung entfaltet.

2. Torsionsschwingungsdämpfer nach Anspruch 1, **dadurch gekennzeichnet, dass** die zweite Energiespeichereinrichtung (12) eine Federeinrichtung umfasst, die eine degressiv verlaufende Federkennlinie aufweist.

3. Torsionsschwingungsdämpfer nach Anspruch 2, **dadurch gekennzeichnet, dass** die Federeinrichtung eine Schnappfeder (13) umfasst.

4. Torsionsschwingungsdämpfer nach einem der vorhergehenden Ansprüche, **dadurch gekennzeichnet, dass** die zweite Energiespeichereinrichtung (12) mit einer der Schwungmassen (1,2) fest verbunden ist.

5. Torsionsschwingungsdämpfer nach Anspruch 4, **dadurch gekennzeichnet, dass** die zweite Energiespeichereinrichtung (12) so mit der anderen Schwungmasse (2,1) gekoppelt ist, dass sich die andere Schwungmasse (2,1) relativ zu der fest mit der zweiten Energiespeichereinrichtung (12) verbundenen Schwungmasse (1,2) ohne großen Widerstand um kleine Verdrehwinkel verdrehen kann.

6. Torsionsschwingungsdämpfer nach Anspruch 5, **dadurch gekennzeichnet, dass** die zweite Energiespeichereinrichtung (12) über eine Freilaufeinrichtung mit der anderen Schwungmasse (2,1) verbunden ist.

7. Torsionsschwingungsdämpfer nach Anspruch 6, **dadurch gekennzeichnet, dass** die Freilaufeinrichtung zwei gegenläufige Freiläufe umfasst.

8. Torsionsschwingungsdämpfer nach Anspruch 6**, dadurch gekennzeichnet, dass** die Freilaufeinrichtung einen doppelt wirkenden Freilauf umfasst.

9. Torsionsschwingungsdämpfer nach Anspruch 7 oder 8, **dadurch gekennzeichnet, dass** die Freilaufeinrichtung mindestens eine Rolle (82) umfasst, die radial außen drehbar an der zweiten Energiespeichereinrichtung (76) angebracht ist.

10. Torsionsschwingungsdämpfer nach Anspruch 9, **dadurch gekennzeichnet, dass** die Rolle (82) in einem Führungskanal (84) geführt ist, der, bezogen auf einen Kreisbogen (114) um die Drehachse der Schwungmassen, schräg verläuft.

11. Torsionsschwingungsdämpfer nach Anspruch 10, **dadurch gekennzeichnet, dass** der Führungskanal (84) von zwei Seitenwänden (86,87) einer Führungseinrichtung (85) begrenzt ist.

12. Torsionsschwingungsdämpfer nach Anspruch 11, **dadurch gekennzeichnet, dass** die beiden Seitenwände (86,87) der Führungseinrichtung (85) entlang dem Führungskanal (84) parallel zueinander verlaufen.

13. Torsionsschwingungsdämpfer nach Anspruch 12, **dadurch gekennzeichnet, dass** der Abstand der beiden Seitenwände (86,87) der Führungseinrichtung (85) an den Enden des Führungskanals (84) abnimmt.

14. Torsionseinrichtungsdämpfer nach einem der Ansprüche 11 bis 13, **dadurch gekennzeichnet, dass** die beiden Seitenwände (86,87), im Querschnitt betrachtet, durch ein dachförmiges Verbindungselement (88) miteinander verbunden sind, das zwei sich schneidende Dachflächen aufweist.

15. Torsionsschwingungsdämpfer nach einem der Ansprüche 11 bis 14, **dadurch gekennzeichnet, dass** an der Führungseinrichtung (85) Reibbeläge (91,92) befestigt sind, die in Abhängigkeit vom Zustand der zweiten Energiespeichereinrichtung (76) zwischen der Führungseinrichtung (85) und einer der Schwungmassen, insbesondere der primären Schwungmasse (71), eingeklemmt werden.

## Claims

1. Torsional vibration damper, in particular split flywheel, with a primary flywheel mass (1) which can be connected fixedly to the rotation to the driveshaft of an internal combustion engine, and a secondary flywheel mass (2) which can be rotated relative to the primary flywheel mass (1) counter to the resistance of a first energy accumulator device (8) and a second energy accumulator device (12) which is connected in parallel to the first energy accumulator device (8), **characterized in that** the second energy accumulator device (12) is coupled to the two flywheel masses (1, 2) such that the second energy accumulator device (12) exerts a decreasing action solely in the case of low angles of rotation, in particular of 1° to 10°, and not in the case of high angles of rotation, in particular of more than 10°.

2. Torsional vibration damper according to Claim 1, **characterized in that** the second energy accumulator device (12) comprises a spring device which has a spring characteristic curve having a decreasing profile.

3. Torsional vibration damper according to Claim 2, **characterized in that** the spring device comprises a kickover spring (13).

4. Torsional vibration damper according to one of the preceding claims, **characterized in that** the second energy accumulator device (12) is connected fixedly to one of the flywheel masses (1, 2).

5. Torsional vibration damper according to Claim 4, **characterized in that** the second energy accumulator device (12) is coupled to the other flywheel mass (2, 1) such that the other flywheel mass (2, 1) can rotate without high resistance through low angles of rotation in relation to the flywheel mass (1, 2) connected fixedly to the second energy accumulator device (12).

6. Torsional vibration damper according to Claim 5, **characterized in that** the second energy accumulator device (12) is connected to the other flywheel mass (2, 1) via a freewheel device.

7. Torsional vibration damper according to Claim 6, **characterized in that** the freewheel device comprises two contradirectional freewheels.

8. Torsional vibration damper according to Claim 6, **characterized in that** the freewheel device comprises one double-acting freewheel.

9. Torsional vibration damper according to Claim 7 or 8, **characterized in that** the freewheel device comprises at least one roller (82) which is attached rotatably, radially on the outside, to the second energy accumulator device (76).

10. Torsional vibration damper according to Claim 9, **characterized in that** the roller (82) is guided in a guide channel (84) which rolls obliquely with respect to a circle arc (114) about the axis of rotation of the flywheel masses.

11. Torsional vibration damper according to Claim 10, **characterized in that** the guide channel (84) is delimited by two side walls (86, 87) of a guide device (85).

12. Torsional vibration damper according to Claim 11, **characterized in that** the two side walls (86, 87) of the guide device (85) run parallel to one another along the guide channel (84).

13. Torsional vibration damper according to Claim 12, **characterized in that** the distance between the two side walls (86, 87) of the guide device (85) decreases at the ends of the guide channel (84).

14. Torsional vibration damper according to one of Claims 11 to 13, **characterized in that** the two side walls (86, 87), as seen in cross section are connected to one another by means of a roof-shaped connection element (88) which has two intersecting roof faces.

15. Torsional vibration damper according to one of Claims 11 to 14, **characterized in that** the guide device (85) has fastened to it frictional linings (91, 92) which are clamped between the guide device (85) and one of the flywheel masses, in particular the primary flywheel mass (71), as a function of the state of the second energy accumulator device (76).

## Revendications

1. Amortisseur de vibrations de torsion, en particulier volant divisé, avec une masse centrifuge primaire (1) qui peut être rendue solidaire en rotation de l'arbre d'entraînement d'un moteur à combustion interne, et une masse centrifuge secondaire (2) qui peut tourner par rapport à la masse centrifuge primaire (1) contre la résistance d'un premier dispositif d'accumulation d'énergie (8) et d'un deuxième dispositif d'accumulation d'énergie (12) qui est monté parallèlement au premier dispositif d'accumulation d'énergie (8), **caractérisé en ce que** le deuxième dispositif d'accumulation d'énergie (12) est couplé aux deux masses centrifuges (1, 2) de telle manière que le deuxième dispositif d'accumulation d'énergie (12) n'exerce une action dégressive que pour de petits angles de rotation, en particulier de 1° à 10°, et pas pour de grands angles de rotation, en particulier supérieurs à 10°.

2. Amortisseur de vibrations de torsion selon la revendication 1, **caractérisé en ce que** le deuxième dispositif d'accumulation d'énergie (12) comprend un dispositif à ressort qui présente une caractéristique élastique dégressive.

3. Amortisseur de vibrations de torsion selon la revendication 2, **caractérisé en ce que** le dispositif à ressort comprend un ressort à déclic (13).

4. Amortisseur de vibrations de torsion selon l'une quelconque des revendications précédentes, **caractérisé en ce que** le deuxième dispositif d'accumulation d'énergie (12) est solidaire d'une des masses centrifuges (1, 2).

5. Amortisseur de vibrations de torsion selon la revendication 4, **caractérisé en ce que** le deuxième dispositif d'accumulation d'énergie (12) est couplé à l'autre masse centrifuge (2, 1), de telle manière que l'autre masse centrifuge (2, 1) puisse tourner sans grande résistance sur de petits angles de rotation par rapport à la masse centrifuge (1, 2) solidaire du deuxième dispositif d'accumulation d'énergie (12).

6. Amortisseur de vibrations de torsion selon la revendication 5, **caractérisé en ce que** le deuxième dispositif d'accumulation d'énergie (12) est relié à l'autre masse centrifuge (2, 1) par un dispositif de roue libre.

7. Amortisseur de vibrations de torsion selon la revendication 6, **caractérisé en ce que** le dispositif de roue libre comprend deux roues libres tournant en sens contraire.

8. Amortisseur de vibrations de torsion selon la revendication 6, **caractérisé en ce que** le dispositif de roue libre comprend une roue libre à double action.

9. Amortisseur de vibrations de torsion selon la revendication 7 ou 8, **caractérisé en ce que** le dispositif de roue libre comprend au moins un rouleau (82) qui est monté de façon rotative, radialement à l'extérieur, sur le deuxième dispositif d'accumulation d'énergie (76).

10. Amortisseur de vibrations de torsion selon la revendication 9, **caractérisé en ce que** le rouleau (82) est guidé dans un canal de guidage (84) qui est oblique par rapport à un arc de cercle (114) autour de l'axe de rotation des masses centrifuges.

11. Amortisseur de vibrations de torsion selon la revendication 10, **caractérisé en ce que** le canal de guidage (84) est délimité par deux parois latérales (86, 87) d'un dispositif de guidage (85).

12. Amortisseur de vibrations selon la revendication 11, **caractérisé en ce que** les deux parois latérales (86, 87) du dispositif de guidage (85) sont parallèles l'une à l'autre le long du canal de guidage (84).

13. Amortisseur de vibrations de torsion selon la revendication 12, **caractérisé en ce que** la distance entre les deux parois latérales (86, 87) du dispositif de guidage (85) diminue aux extrémités du canal de guidage (84).

14. Amortisseur de vibrations de torsion selon l'une quelconque des revendications 11 à 13, **caractérisé en ce que** les deux parois latérales (86, 87), considérées en coupe transversale, sont reliées l'une à l'autre par un élément de liaison en forme de toit (88) qui présente deux faces de toit qui se coupent.

15. Amortisseur de vibrations de torsion selon l'une quelconque des revendications 11 à 14, **caractérisé en ce que** le dispositif de guidage (85) est muni de garnitures de friction (91, 92) qui sont pincées entre le dispositif de guidage (85) et une des masses centrifuges, en particulier la masse centrifuge primaire (71), en fonction de l'état du deuxième dispositif d'accumulation d'énergie (76).
